# EUROPÄISCHE PATENTSCHRIFT

(11) **EP 1 066 912 B1**
(45) Veröffentlichungstag und Bekanntmachung des Hinweises auf die Patenterteilung: **19.11.2003**
(21) Anmeldenummer: 00113730.6
(22) Anmeldetag: 28.06.2000
(51) Int. Cl.: B23K 11/11, B23K 11/30, B23K 11/31, B23K 20/12

(54) **Verfahren zum Widerstandsschweissen von Metallteilen**
Method for resistance welding metal parts
Procédé de soudage par résistance pour des pièces métalliques

(30) Priorität: 02.07.1999 DE 19930336
(43) Veröffentlichungstag der Anmeldung: 10.01.2001
(73) Patentinhaber: Patent-Treuhand-Gesellschaft für elektrische Glühlampen mbH, 81543 München (DE)
(72) Erfinder: Mittler, Bodo, 86356 Neusäss (DE); Mack, Joachim, 80801 München (DE)

(56) Entgegenhaltungen:
- AT-B- 326 980
- GB-A- 2 177 336
- US-A- 4 780 589
- US-A- 5 874 875

## Beschreibung

Die Erfindung betrifft ein Verfahren zum Widerstandsschweißen von Metallteilen gemäß des Oberbegriffs des Patentanspruchs 1.

### I. Technisches Gebiet

Insbesondere handelt es sich bei der Erfindung um ein Widerstandsschweißverfahren zum Verschweißen von Metallteilen, von denen zumindest eines eine verunreinigte oder aufgerauhte Oberfläche besitzt.

Üblicherweise werden die zu verschweißenden Metallteile zum Widerstandsschweißen einander überlappend, mit Klemmsitz zwischen zwei Schweißelektroden angeordnet. Während des Schweißprozesses wird eine der Schweißelektroden entsprechend der Verformung der Schweißteile nachgeführt, um den Klemmsitz zu gewährleisten. Zum Verschweißen der Metallteile wird an die Schweißelektroden eine elektrische Spannung angelegt, so daß durch die Schweißelektroden und durch die Metallteile ein elektrischer Strom fließt. Die stromdurchflossenen Bereiche der Metallteile werden aufgrund des relativ hohen Übergangswiderstandes zwischen den zu verschweißenden Metallteilen durch den Stromfluß stark erhitzt und miteinander verschweißt. Diese üblicherweise angewandte Art des Widerstandsschweißens ergibt eine unzureichende Schweißqualität bei der Verschweißung von Metallteilen mit verunreinigter oder aufgerauhter Oberfläche.

### II. Darstellung der Erfindung

Es ist die Aufgabe der Erfindung, ein Verfahren zum Widerstandsschweißen von Metallteilen bereitzustellen, das auch bei der Verschweißung von Metallteilen mit verunreinigten oder aufgerauhten Oberflächen eine zufriedenstellende Schweißqualität ergibt.

Diese Aufgabe wird erfindungsgemäß durch die kennzeichnenden Merkmale des Patentanspruchs 1 gelöst. Besonders vorteilhafte Ausführungen der Erfindung sind in den Unteransprüchen beschrieben.

Zur Durchführung des erfindungsgemäßen Widerstandsschweißverfahrens werden die zu verschweißenden Metallteile einander überlappend zwischen einer ersten und einer zweiten Schweißelektrode angeordnet. Die zu verschweißenden Metallteile werden ferner klemmend zwischen den Schweißelektroden fixiert. Erfindungsgemäß ist wenigstens eine der beiden Schweißelektroden als um seine Zylinderachse drehbar gelagerter Kreiszylinder ausgebildet und liegt mit seiner Mantelfläche an einem der Metallteile an. Zumindest während der Zeitspanne, in der die Schweißelektroden und die Metallteile mit dem Schweißstrom beaufschlagt werden, wird durch Rotation der mindestens einen, als Kreiszylinder ausgebildeten Schweißelektrode zwischen der Mantelfläche des Kreiszylinders und dem anliegenden Metallteil Gleitreibung erzeugt. Durch die Reibung wird, während des eigentlichen Schweißvorganges, die der Mantelfläche zugewandte Oberfläche des an dem Kreiszylinder anliegenden Metallteils im Bereich der Schweißstelle gereinigt und/oder geglättet und dadurch der elektrische Kontakt zwischen der mindestens einen, als Kreiszylinder ausgebildeten Schweißelektrode und dem daran anliegenden Metallteil verbessert. Außerdem verhindert die erfindungsgemäße Rotation der mindestens einen, als Kreiszylinder ausgebildeten Schweißelektrode das Auftreten des sogenannten Klebe-Effektes zwischen der Schweißelektrode und dem zu verschweißenden Metallteil. Das Wort Klebe-Effekt beschreibt eine beim Schweißvorgang enstehende Verklebung einer Schweißelektrode mit dem damit im Kontakt stehenden Metallteil. Durch das Auseinanderziehen der Schweißelektroden nach Beendigung des Schweißverfahrens wird die Verklebung zwischen der Schweißelektroden und dem Metallteil wieder gelöst. Allerdings kann das zu einer Beschädigung der Schweißelektrode oder der Schweißverbindung führen.

Vorteilhafterweise wird die mindestens eine als Kreiszylinder ausgebildete Schweißelektrode bereits vor dem eigentlichen Schweißvorgang in Rotation versetzt. Außerdem wird die mindestens eine, als rotierender Kreiszylinder ausgebildete Schweißelektrode vorteilhafterweise mit Hilfe einer Reinigungsvorrichtung von dem durch die Gleitreibung verursachten, an ihrer Mantelfläche haftenden Abrieb gereinigt. Der Reinigungsprozeß erfolgt vorteilhafterweise bereits während des Schweißverfahrens, um eine gleichbleibende Schweißqualität zu gewährleisten. Durch den Reinigungsprozeß werden etwaige Beschädigungen der Schweißelektrodenoberfläche, die im Bereich der Schweißstelle durch den Schweißstromübergang entstanden sind, beseitigt.

Besonders vorteilhaft ist das erfindungsgemäße Widerstandsschweißverfahren zur Verschweißung von folienartigen oder blechartigen Metallteilen, die verunreinigte oder aufgerauhte Oberflächen besitzen, mit drahtartigen oder stabförmigen Metallteilen anwendbar.

### III. Beschreibung des beyorzugten Ausführungsbeispiels

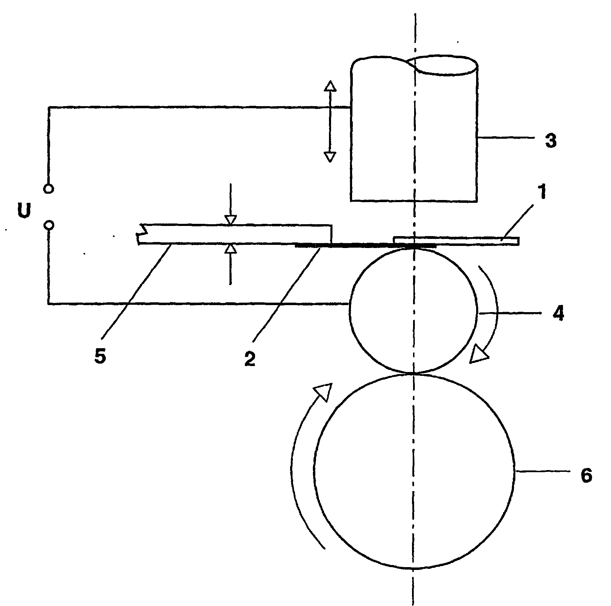

Nachstehend wird die Erfindung anhand eines bevorzugten Ausführungsbeispiels näher erläutert. Die Figur zeigt schematisch den Aufbau einer Widerstandsschweißvorrichtung, mit Hilfe der das erfindungsgemäße Verfahren am Beispiel einer Verschweißung eines Wolframdrahtes mit einer sandgestrahlten Molybdänfolie beschrieben wird. Der Wolframdraht und die Molybdänfolie sind zur gasdichten Einschmelzung in einem Glasgefäß einer elektrischen Lampe vorgesehen. Sie bilden eine elektrische Stromzuführung für das in dem Glasgefäß angeordnete Leuchtmittel.

Zur Verschweißung werden der Wolframdraht 1 und die mit Korund sandgestrahlte, in einer Halterung 5 fixierte Molybdänfolie 2 einander überlappend zwischen zwei Schweißelektroden 3, 4 positioniert. Die beiden Schweißelektroden 3, 4 bestehen aus Wolfram. Die erste, obere Schweißelektrode 3 ist stabförmig ausgebildet, während die zweite, untere Schweißelektrode 4 als drehbar um seine Zylinderachse gelagerter Kreiszylinder ausgeführt ist. Die zu verschweißenden Metallteile 1, 2 werden so angeordnet, daß die Unterseite der Molybdänfolie 2 auf der Mantelfläche der als drehbar gelagerten Kreiszylinder 4 ausgebildeten unteren Schweißelektrode aufliegt und der Wolframdraht 1 auf der Oberseite der Molybdänfolie 2 aufliegt. Anschließend wird die obere, stabförmige Schweißelektrode 3 auf den Wolframstab 1 abgesenkt, so daß der Wolframstab 1 und die Molybdänfolie 2 klemmend zwischen beiden Schweißelektroden 3, 4 fixiert sind. Die untere Schweißelektrode 4 wird in Rotation versetzt, so daß zwischen der Mantelfläche des Kreiszylinders 4 und der Unterseite der Molybdänfolie 2 Gleitreibung auftritt. Dadurch wird die Unterseite der sandgestrahlten Molybdänfolie 2 im Bereich der Schweißstelle von den an ihr haftenden Strahlmittelteilchen, in diesem Fall von Korundteilchen, befreit. Ein eventuell an der Mantelfläche der unteren Schweißelektrode 4 haftender Abrieb wird mit Hilfe einer gegenläufig zur Schweißelektrode 4 rotierenden Schleifscheibe 6 entfernt. Durch das Entfernen der Korundteilchen aus dem Bereich der Schweißstelle wird der elektrische Kontakt zwischen der Molybdänfolie 2 und der unteren Schweißelektrode 4 verbessert. Anschließend wird an die Schweißelektroden 3, 4 eine elektrische Spannung U angelegt, so daß durch die Schweißelektroden 3, 4 und durch den Wolframdraht 1 sowie durch die Molybdänfolie 2 im Bereich der Schweißstelle ein elektrischer Strom ausreichend hoher Stromstärke fließt, der zum Verschweißen von Molybdänfolie 2 und Wolframdraht 1 führt. Die untere Schweißelektrode 4 rotiert während des Schweißvorganges, also während des Schweißstromflusses, mit einer Drehzahl von ungefähr drei Umdrehungen pro Minute. Durch den Klemmsitz der Metallteile 1, 2 zwischen den Schweißelektroden 3, 4 wird auf die Metallteile 1, 2 eine Kraft von ungefähr fünf Newton ausgeübt.

Die Erfindung beschränkt sich nicht auf das oben näher erläuterte Ausführungsbeispiel. Beispielsweise können auch beide Schweißelektroden als um ihre Zylinderachse drehbar gelagerte Kreiszylinder ausgebildet sein, so daß die Kontaktflächen von beiden Metallteilen mit der entsprechenden Schweißelektrode behandelt werden können. Anstelle von Molybdänfolien und Wolframdrähten können auch beliebige andere Metallteile mit Hilfe des erfindungsgemäßen Verfahrens verschweißt werden. Die obengenannten Zahlenwerte für die Drehzahl der unteren Schweißelektrode und den Druck der Schweißelektroden auf die Metallteile sind nur als Beispiele zu verstehen. Die Drehzahl kann zwischen 3-130 Umdrehungen pro Minute und die von den Schweißelektroden auf die Metallteile ausgeübte Kraft zwischen 1-40 N liegen. Die Reinigung der Schweißelektrode mittels der Schleifscheibe kann zu jedem Zeitpunkt erfolgen.

## Patentansprüche

1. Verfahren zum Verschweißen von Metallteilen, wobei
- die zu verschweißenden Metallteile (1, 2) während des Schweißprozesses zwischen einer ersten (3) und einer zweiten Schweißelektrode (4) einander überlappend angeordnet sind,
- die zu verschweißenden Metallteile (1, 2) klemmend zwischen den Schweißelektroden (3, 4) fixiert sind,
- zumindest eine der Schweißelektroden (4) als um seine Zylinderachse drehbar gelagerter Kreiszylinder ausgebildet ist, dessen Mantelfläche an einem der Metallteile (2) anliegt,
**dadurch gekennzeichnet, daß**
- das Verfahren ein Widerstandsschweißverfahren ist, bei dem die Schweißelektroden (3, 4) und die zu verschweißenden Metallteile (1, 2) mit einem zur Herstellung der Schweißverbindung ausreichend hohen elektrischen Strom beaufschlagt werden,
- der Kreiszylinder (4) zumindest während der Zeitspanne, in der die Schweißelektroden (3, 4) und die zu verschweißenden Metallteile (1, 2) mit dem elektrischen Strom beaufschlagt werden, um seine Zylinderachse rotiert, so daß zwischen der Mantelfläche des Kreiszylinders (4) und dem daran anliegenden Metallteil (2) Gleitreibung erzeugt wird, die eine Reinigung oder/und Glättung der an der Mantelfläche des Kreiszylinders (4) anliegenden Oberfläche des Metallteils (2) im Bereich der Schweißstelle bewirkt.

2. Verfahren nach Anspruch 1, **dadurch gekennzeichnet, daß** der Kreiszylinder (4) bereits bevor die Schweißelektroden (3, 4) und die zu verschweißenden Metallteile (1, 2) mit dem elektrischen Strom beaufschlagt werden um seine Zylinderachse rotiert.

3. Verfahren nach Anspruch 1, **dadurch gekennzeichnet, daß** die Mantelfläche des Kreiszylinders (4) mittels einer Reinigungsvorrichtung (6) gereinigt wird.

4. Verfahren nach Anspruch 1, **dadurch gekennzeichnet, daß** die zu verschweißenden Metallteile (1, 2) ein stabförmiges oder drahtartiges erstes Metallteil (1) und ein folienartiges oder blechartiges zweites Metallteil (2) sind.

5. Verfahren nach Anspruch 1, **dadurch gekennzeichnet, daß** zumindest eines der Metallteile (2) wenigstens eine verunreinigte oder aufgerauhte Oberfläche besitzt und die Mantelfläche des Kreiszylinders (4) an der wenigstens einen verunreinigten oder aufgerauhten Oberfläche anliegt.

6. Verwendung des Verfahren nach Anspruch 1 zur Verschweißung von aufgerauhten Molybdänfolien (2) mit Wolframdrähten (1).

## Claims

1. Method for welding metal parts, in which
- the metal parts (1, 2) which are to be welded are arranged overlapping one another between a first welding electrode (3) and a second welding electrode (4) during the welding process,
- the metal parts (1, 2) which are to be welded are fixed clamped between the welding electrodes (3, 4),
- at least one of the welding electrodes (4) is designed as a cylinder which is mounted such that it can rotate about its cylinder axis and the lateral surface of which bears against one of the metal parts (2),
**characterized in that**
- the method is a resistance welding method, in which the welding electrodes (3, 4) and the metal parts (1, 2) which are to be welded are acted on by an electric current which is sufficiently high to produce the welded joint,
- the cylinder (4), at least during the period of time in which the welding electrodes (3, 4) and the metal parts (1, 2) which are to be welded are being acted on by the electric current, rotates about its cylinder axis, so that sliding friction is generated between the lateral surface of the cylinder (4) and the metal part (2) bearing against it, and this sliding friction is responsible for cleaning and/or smoothing that surface of the metal part (2) which bears against the lateral surface of the cylinder (4) in the region of the welding location.

2. Method according to Claim 1, **characterized in that** the cylinder (4) is rotating about its cylinder axis even before the welding electrodes (3, 4) and the metal parts (1, 2) which are to be welded are acted on by the electric current.

3. Method according to Claim 1, **characterized in that** the lateral surface of the cylinder (4) is cleaned by means of a cleaning device (6).

4. Method according to Claim 1, **characterized in that** the metal parts (1, 2) which are to be welded are a first metal part (1) in bar, rod or wire form and a second metal part (2) in foil or sheet form.

5. Method according to Claim 1, **characterized in that** at least one of the metal parts (2) has at least one contaminated or roughened surface, and the lateral surface of the cylinder (4) bears against the at least one contaminated or roughened surface.

6. Use of the method according to Claim 1 to weld roughened molybdenum foils (2) to tungsten wires (1).

## Revendications

1. Procédé de soudage de pièces métalliques dans lequel
- on met à recouvrement les pièces (1, 2) métalliques à souder pendant l'opération de soudage entre une première (3) et une deuxième (4) électrode de soudage,
- on immobilise les pièces (1, 2) métalliques à souder en les serrant entre les électrodes (3, 4) de soudage,
- on constitue au moins l'une des électrodes (4) de soudage sous la forme d'un cylindre de section transversale circulaire monté tournant par rapport à son axe de cylindre et dont la surface latérale s'applique à l'une des pièces (2) métalliques,
**caractérisé en ce que**
- le procédé est un procédé de soudage par résistance dans lequel on alimente les électrodes (3, 4) de soudage et les pièces (1, 2) métalliques à souder par un courant électrique suffisamment intense pour obtenir l'assemblage soudé,
- on fait tourner autour de son axe de cylindre le cylindre (4) de section transversale circulaire au moins pendant le laps de temps pendant lequel les électrodes (3, 4) de soudage et les pièces (1, 2) métalliques à souder sont alimentées en le courant électrique de manière à produire entre la surface latérale du cylindre (4) de section transversale circulaire et la pièce (2) métallique qui s'y applique un frottement glissant qui provoque dans la région du point de soudage un nettoyage ou/et un lissage de la surface de la pièce (2) métallique qui s'applique à la surface latérale du cylindre (4) de section transversale circulaire.

2. Procédé suivant la revendication 1, **caractérisé en ce que** l'on fait tourner autour de son axe de cylindre le cylindre (4) de section transversale circulaire dès avant que les électrodes (3, 4) de soudage et les pièces (1, 2) métalliques à souder sont alimentées en le courant électrique.

3. Procédé suivant la revendication 1, **caractérisé en ce que** l'on nettoie la surface latérale du cylindre (4) de section transversale circulaire au moyen d'un dispositif (6) de nettoyage.

4. Procédé suivant la revendication 1, **caractérisé en ce que** les pièces (1, 2) métalliques à souder sont une première pièce (1) métallique en forme de barreau ou de type en fil et une deuxième pièce (2) métallique de type en feuille ou en tôle.

5. Procédé suivant la revendication 1, **caractérisé en ce qu'**au moins l'une des pièces (2) métalliques a au moins une surface non nettoyée ou rugueuse et la surface latérale du cylindre (4) de section transversale circulaire s'applique à la au moins une surface non nettoyée ou rugueuse.

6. Utilisation du procédé suivant la revendication 1, pour souder des rubans (2) de molybdène rendus rugueux à des fils (1) de tungstène.
